# EUROPEAN PATENT SPECIFICATION

(11) **EP 2 943 729 B1**
(45) Date of publication and mention of the grant of the patent: **10.04.2019**
(21) Application number: 13818840.4
(22) Date of filing: 09.12.2013
(51) Int. Cl.: F24H 1/28, F24H 8/00

(54) **FIRED HEAT EXCHANGER**
BEHEIZTER WÄRMETAUSCHER
ÉCHANGEUR DE CHALEUR À FOYER

(30) Priority: 10.01.2013 PL 40241313
(43) Date of publication of application: 18.11.2015
(73) Proprietor: AIC Spólka Akcyjna, 81-577 Gdynia (PL)
(72) Inventor: SIEMIENCZUK, Tomasz, 80-351 Gdansk (PL); SZCZEPANSKI, Krzysztof, 83-110 Tczew (PL); TOMICKI, Ariel, 80-180 Kowale (PL)
(74) Representative: Pomianek, Grazyna
(86) International application number: PCT/PL2013/000161
(87) International publication number: WO 2014/109654

(56) References cited:
- EP-A2- 0 271 434
- DE-U1- 8 520 831
- DE-U1- 20 109 115
- FR-A- 1 350 810
- GB-A- 1 101 621
- NL-C- 43 790

## Description

The subject of the invention is a fired heat exchanger, designed mainly for heating hot domestic or drinking water.

From the EP 2 246 641 European Patent Application, a water heater is known, having a cylindrical outer shell with a crowned upper cap and axially located combustion chamber enclosed at the bottom with a bonnet with a concentric burner hole and an arched cap at the top, connected with the cylindrical side wall by means of a horizontal circular tube sheet to which tubes are connected for combustion gas flow, arranged vertically around the combustion chamber side wall. Between the outer shell and the combustion chamber walls, there is a water tank filled with water through an inlet pipe located at the lower cylindrical part of the outer shell, and the hot water is discharged through a pipe arranged axially in its top cap. Combustion gas from the combustion chamber is directed to the tubes through the arched cap of said chamber.

FR 1 350 810 disclosed a heat generator for heating direct flow of liquid fluids, which is characterized in that the heating body is constituted by a focus at two different tube sections, the widest section being located in the actual combustion zone, and the section lower in the area where the gases are already partially cooled by radiation. The document discloses all the features of the preamble of claim 1.

GB 1 101 621 disclosed a fire-tube boiler in which the fire-tubes communicate with the combustion chamber at the burner end of the chamber has at the burner end a water-cooled insert defining with the walls of the combustion chamber passages of reduced cross-sectional area through which the gases must pass before they enter the fire-tubes. Some of the gases arc thus induced to recirculate back to the root of the burner flame in the combustion chamber. The insert has a central aperture for the burner and is connected by pipes with the water space of the boiler. The insert may also be lined with fire-clay or like heat-insulating material.

In the solution according to the mentioned patent application, on the surface of the circular tube sheet, at the water tank side, steam bubbles are formed due to the high temperature at that point, which obstruct the contact of water with that surface, thus impeding heat exchange. Heat efficiency can be improved by increasing the number of tubes for combustion gas flow, which involves increasing the cross sectional area of the heater, which is not convenient for its operating properties.

The objective of the invention is to eliminate the above problems and increase the intensity of heat exchange.

A fired heat exchanger is provided, according to the present invention, as defined in claim 1.

The tubes for combustion gas flow are conveniently close in shape to the inverse letter "L", with its shorter arm connected to the combustion chamber and having embossed ribs.

The holes connecting the tubes for combustion gas flow with the combustion chamber are made at the same or different heights of the combustion chamber side wall.

Holes in the circular tube sheet of the water tank, connecting the tubes for combustion gas flow with the flue duct to the stack, are arranged in at least one ring.

The combustion chamber side wall is either cylindrical or conical, with a narrowing upwards or downwards.

The combustion chamber bonnet is conveniently provided with at least one drain tube to discharge condensate from the combustion chamber and is inclined towards that drain tube.

A water inlet pipe is located in the outer shell side wall or in the water distributor bottom.

The cross sectional area of the water tank preferably decreases towards the water outlet pipe.

An embodiment of the invention will now be described with reference to the accompanying drawings in which:
Fig.1 shows the axial cross section of the exchanger with the cylindrical combustion chamber;
Fig.2 shows the axial cross section of the exchanger with the conical combustion chamber;
Fig.3 shows the axial cross section of the water distributor with water supply at the side;
Fig.4 shows the axial cross section of the water distributor with water supply at the bottom;
Fig.5 and Fig.6 show the axial cross section of the water distributor with side outlet holes of different shapes;
Fig.7, Fig.8 and Fig.9 show the axial cross section of the combustion chamber bottom with varied sloping;
Fig.10 and Fig.11 show the water tank tube sheet with various configurations of holes for the tubes for combustion gas flow.

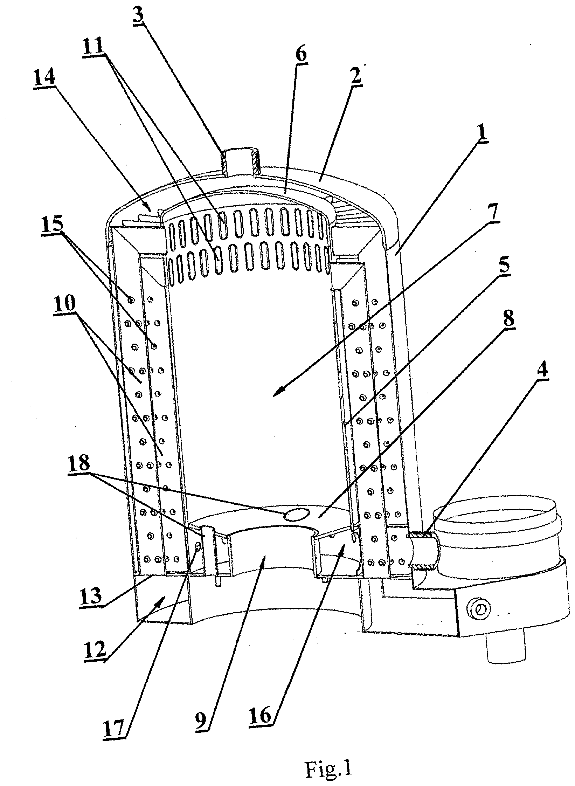

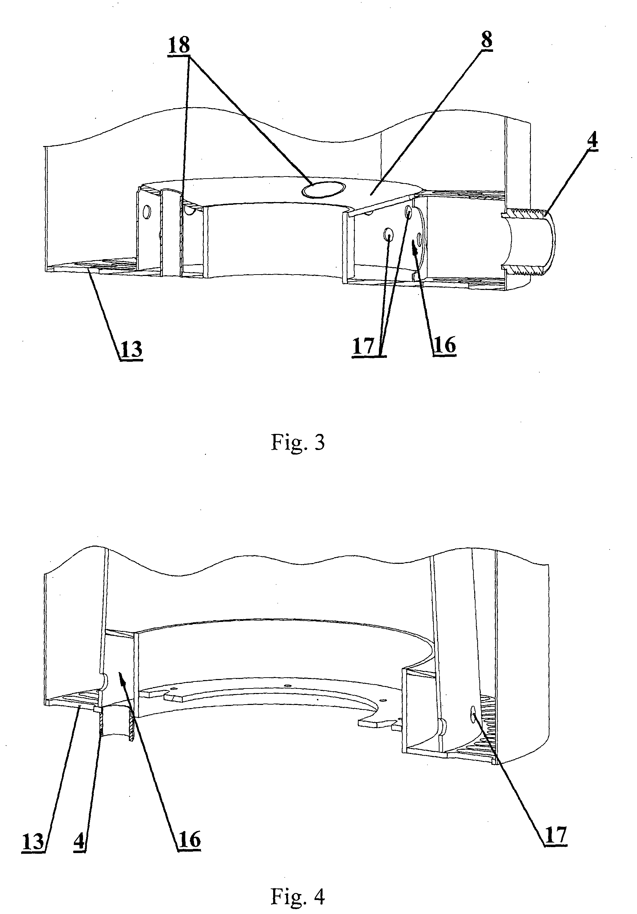

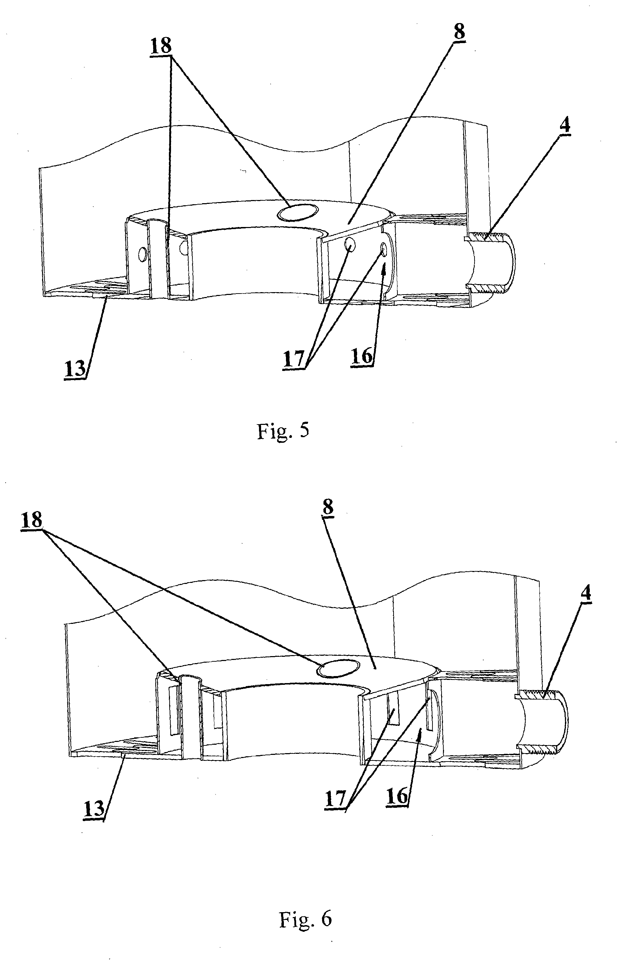

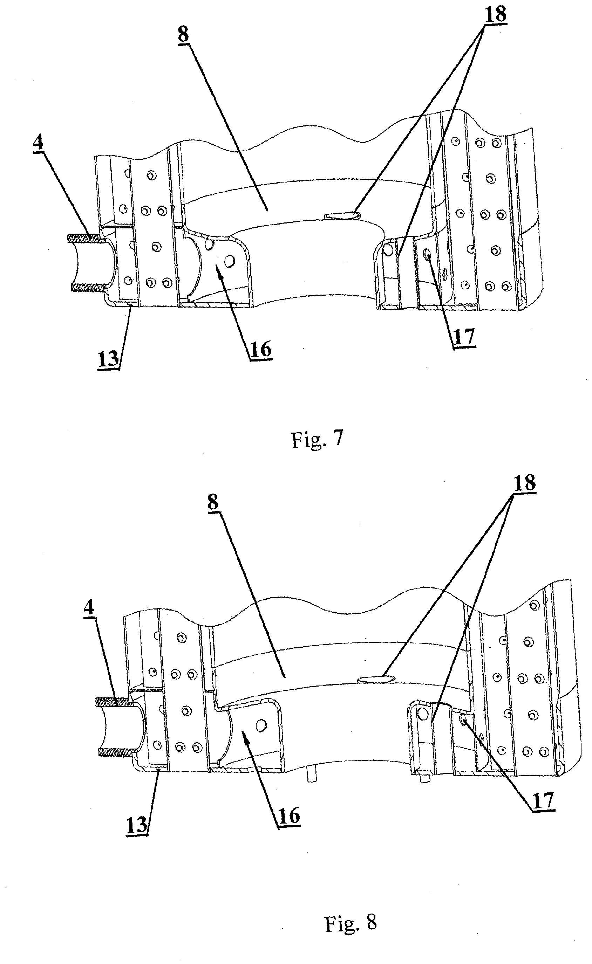

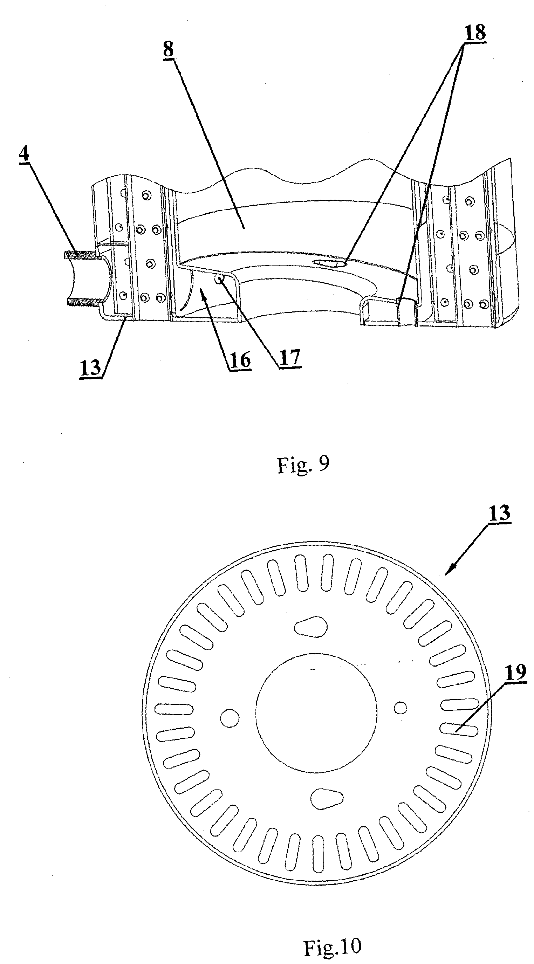

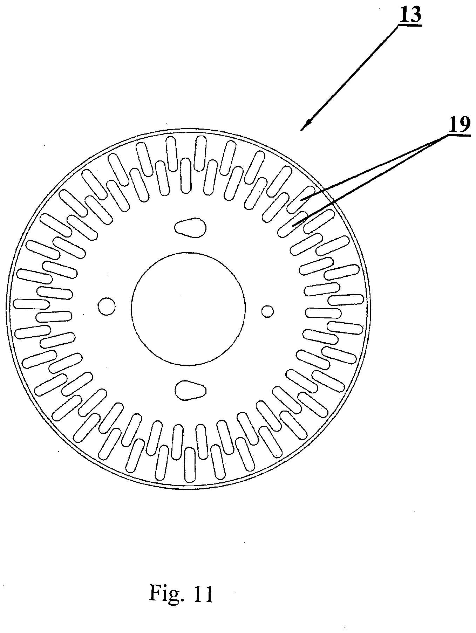

The fired heat exchanger shown in Fig.1 comprises the outer cylindrical shell 1 with the crowned cap 2 with the hot water outlet pipe 3, located concentrically, and with the cold water inlet pipe 4, located at the bottom of the outer shell 1 side wall. Inside the outer shell 1, the cylindrical inner shell 5 is located with a crowned cap 6, which forms a wall of the combustion chamber 7 located inside, enclosed with the bonnet 8 at the bottom with a burner hole 9. Around the inner shell 5, tubes 10 are arranged radially to ensure flow of the combustion gas formed in the combustion chamber 7. The tubes 10 are close in shape to an inverse letter "L" and connected with a shorter arm to the combustion chamber 7 through holes 11 made in the upper part of the side wall of the combustion chamber 7 and with the longer arm to the flue duct 12 for exhaust of the combustion gas to the stack through the tube sheet 13 of the water tank 14. The holes 11 are arranged in two rows at two different heights on the combustion chamber 7 walls. The tubes 10 for combustion gas flow, connected to the lower holes 11, have both arms shorter and are located closer to the inner shell 5 than the tubes 10 connected with higher holes 11. The tubes 10 are arranged vertically and connected to the holes 19 in the tube sheet 13, arranged in two rings, as shown in Fig.11. To increase gas flow turbulence, the tubes 10 have stamped ribs 15. Under the bonnet 8 of the combustion chamber 7, the water distributor 16 is located, with holes 17 through which cold water is supplied to the water tank 14 and uniformly distributed, ensuring intense heat exchange. Holes 17 can be oval, as shown in Fig.3, 5, 7, 8, or have a different shape, rectangular for example, as shown in Fig.6. Between the outer shell 1 with the crowned cap 2 and the inner shell 5 with the crowned cap 6, which forms the combustion chamber 7 wall, and the side wall of the water distributor 16, the water tank 14 is formed, enclosed with the tube sheet 13 at the bottom. Cold water to the water distributor 16 is supplied through the inlet pipe 4, located in the side wall of the outer shell 1, as shown in Fig.1, 3, 5, 6, 7, 8, or through the inlet pipe at the water distributor 16 bottom, as shown in Fig.4. For water drainage from the combustion chamber 7, in the bonnet 8, drain tubes 18 are located, whereby the bonnet 8 is inclined concentrically towards the tubes 18, as shown in Fig.7, or inclined outwards from the centre towards the tubes 18, as shown in Fig. 8, or inclined in one direction towards the tubes 18, as shown in Fig.9.

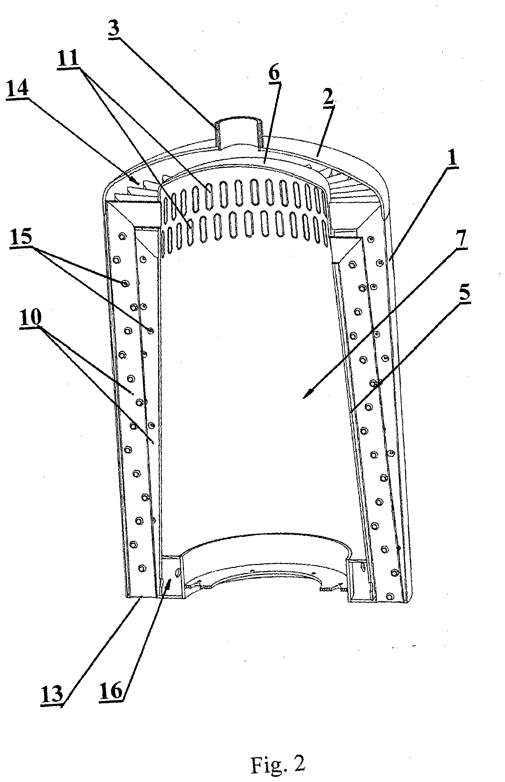

To increase water flow velocity, the cross sectional area of the water tank 14, between the cap 2 of the outer shell 1 and the cap 6 of the inner shell 5, decreases towards the hot water outlet pipe 3, as shown in Fig.1 and Fig.2.

In another variant of the invention, in the heat exchanger described in the above examples, the inner shell 5 can be conical, with a narrowing upwards, as shown in Fig.2, and the tubes 10 are connected to holes 19 in the tube sheet 13 of the water tank 14, arranged in a single ring, as shown in Fig.11. In another execution example, the inner shell 5 can be conical and widening to the top.

Combustion gas formed in the combustion chamber 7 flows through the tubes 10 to the flue duct 12 to the stack. Cold water is supplied through the inlet pipe 4 to the water tank 14 and flows in an opposite direction to the combustion gas flow, making contact with the inner shell 5 (which is heated by the combustion gas), with the tubes 10 for combustion gas flow and the cap 6 of the inner shell 5 and, when heated to the temperature required, it is discharged through the pipe 3. To ensure uniform distribution of cold water in the tank 14, the water is supplied to the tank 14 through the water distributor 16. The condensate in the combustion chamber 7 is discharged through the drain tubes 18.

## Claims

1. A fired heat exchanger, having an outer shell (1) and an inner shell (5), a water tank being formed between the outer shell (1) and the inner shell (5) forming a side wall of a combustion chamber, whereby the combustion chamber is enclosed at the bottom with a bonnet (8) having a burner hole (9),
the heat exchanger having an inlet pipe (4) at the bottom and an outlet pipe (3) at the top part,
the heat exchanger being provided with tubes (10) for combustion gas flow through a flue duct (12) to a stack,
whereby the tubes (10) for combustion gas flow are arranged in the water tank (14) radially around the combustion chamber (7) side wall and are connected to the flue duct (12) using a circular tube sheet (13) of the water tank (14),
the tubes (10) for combustion gas flow are connected to the combustion chamber (7) through first holes (11) made in the upper part of the combustion chamber (7) side wall, **characterised in that** the heat exchanger has a water distributor (16) with second holes (17) for supplying water to the water tank (14) located under the bonnet (8) of the combustion chamber (7) and located on the inner shell (5).

2. The heat exchanger, according to claim 1, **characterised in that** the tubes (10) for combustion gas flow are close in shape to an inverse letter "L", connected with a shorter arm to the combustion chamber (7).

3. The heat exchanger, according to claim 1 or 2, **characterised in that** the tubes (10) for combustion gas flow have embossed ribs (15).

4. The heat exchanger, according to claim 1 to 3, **characterised in that** the first holes (11) connecting the tubes (10) for combustion gas flow with the combustion chamber (7) are made at the same height of the combustion chamber (7) side wall.

5. The heat exchanger, according to claim 1 to 3, **characterised in that** the first holes (11) connecting the tubes (10) for combustion gas flow with the combustion chamber (7) are made at different heights of the combustion chamber (7) side wall.

6. The heat exchanger, according to claim 1 to 5, **characterised in that** third holes (19) in the tube sheet (13) connecting the tubes (10) for combustion gas flow with the flue duct (14) to the stack are arranged in at least one ring.

7. The heat exchanger, according to claim 1 to 6, **characterised in that** the side wall of the combustion chamber (7) is cylindrical in shape.

8. The heat exchanger, according to claim 1 to 6, **characterised in that** the side wall of the combustion chamber (7) is conical and narrowed upwards or downwards.

9. The heat exchanger, according to claim 1 to 8, **characterised in that** the bonnet (8) of the combustion chamber (7) has at least on drain tube (19) for discharging condensate from the combustion chamber (7).

10. The heat exchanger, according to claim 9, **characterised in that** the bonnet (8) of the combustion chamber (7) is inclined towards the drain tube/tubes (19).

11. The heat exchanger, according to claim 1 to 10, **characterised in that** the water inlet pipe (4) is located in the side wall of the outer shell (1).

12. The heat exchanger, according to claim 9 to 10, **characterised in that** the water inlet pipe (4) is located in the bottom of the water distributor (16).

13. The heat exchanger, according to claim 1 to 12, **characterised in that** the cross sectional area of the water tank (14) decreases at the top towards the water outlet pipe (3).

## Patentansprüche

1. Ein beheizter Wärmetauscher mit einem Außenmantel (1) und einem Innenmantel (5) und einem zwischen dem Außenmantel (1) und dem Innenmantel (5) angeordneten Wasserbehälter, der die Seitenwand der Verbrennungskammer bildet, wobei die Verbrennungskammer von unten her mit einem Heizboden (8) mit einer Bohrung für den Brenner (9) abgeschlossen ist, wobei der Wärmetauscher ein Einlaufrohr (4) im unteren Bereich und ein Auslaufrohr (3) im oberen Bereich aufweist, wobei der Wärmetauscher mit Rohren (10) für die Abführung von Abgasen durch einen Abgaskanal (12) in den Schornstein ausgerüstet ist, wobei die Rohre (10) für die Abgase in einem Wasserbehälter (4) radial um die Seitenwand der Verbrennungskammer angeordnet und mit dem Abgaskanal (12) durch den Siebboden (13) des Wasserbehälters (14) verbunden sind, wobei die Rohre (10) für die Ableitung der Abgase durch die ersten Bohrungen (11) im oberen Bereich der Seitenwand der Verbrennungskammer (7) mit der Verbrennungskammer (7) verbunden sind, **dadurch gekennzeichnet, dass** der Wärmetauscher einen Wasserverteiler (16) mit zweiten Bohrungen (16) für die Versorgung des Wasserbehälters (14) mit Wasser aufweist, der unter dem Heizboden (8) der Verbrennungskammer (7) und am Innenmantel (5) angeordnet ist.

2. Wärmetauscher nach dem Anspruch 1, **dadurch gekennzeichnet, dass** die Rohre (10) für die Abführung von Abgasen eine L-ähnliche, aber umgedrehte Form aufweisen, die mit dem kürzeren Arm mit der Verbrennungskammer (7) verbunden ist.

3. Wärmetauscher nach dem Anspruch 1 oder 2, **dadurch gekennzeichnet, dass** die Rohre (10) die Durchstanzungen für die Abführung von Abgasen (15) aufweisen.

4. Wärmetauscher nach dem Anspruch 1 bis 3, **dadurch gekennzeichnet, dass** die ersten Bohrungen (11), die die Abgasrohre (10) mit der Verbrennungskammer (7) verbinden, an derselben Höhe der Seitenwand der Verbrennungskammer (7) angeordnet sind.

5. Wärmetauscher nach dem Anspruch 1 lub 3, **dadurch gekennzeichnet, dass** die ersten Bohrungen (11), die die Abgasrohre (10) mit der Verbrennungskammer (7) verbinden, an unterschiedlichen Höhen der Seitenwand der Verbrennungskammer (7) angeordnet sind.

6. Wärmetauscher nach dem Anspruch 1 bis 5 **dadurch gekennzeichnet, dass** die dritten Bohrungen (19) im Siebboden (13), die die Abgasrohre (10) mit dem Kanal (12) für die Abgasabführung zum Schornstein verbinden, in wenigstens einem Ring angeordnet sind.

7. Wärmetauscher nach dem Anspruch 1 bis 6 **dadurch gekennzeichnet, dass** die Seitenwand der Verbrennungskammer (7) zylinderförmig ausgebildet ist.

8. Wärmetauscher nach dem Anspruch 1 bis 6 **dadurch gekennzeichnet, dass** die Seitenwand der Verbrennungskammer (7) eine konische Form aufweist, die sich nach oben oder nach unten verengt.

9. Wärmetauscher nach dem Anspruch 1 bis 8, **dadurch gekennzeichnet, dass** der Heizboden (8) der Verbrennungskammer (7) wenigstens ein Entwässerungsrohr (19) aufweist, die das Kondensat aus der Verbrennungskammer (7) abführt.

10. Wärmetauscher nach dem Anspruch 9, **dadurch gekennzeichnet, dass** der Heizboden (8) der Verbrennungskammer (7) ein Gefälle in Richtung des Entwässerungsrohrs/ -rohre (19) aufweist.

11. Wärmetauscher nach dem Anspruch 1 bis 10, **dadurch gekennzeichnet, dass** das Einlaufrohr (4) des Wassers in der Seitenwand des Außenmantels (1) angeordnet ist.

12. Wärmetauscher nach dem Anspruch 9 bis 10, **dadurch gekennzeichnet, dass** das Einlaufrohr (4) des Wassers im Boden des Wasserverteilers (16) angeordnet ist.

13. Wärmetauscher nach dem Anspruch 1 bis 12, **dadurch gekennzeichnet, dass** der Querschnitt der Wasserkammer (14) sich im oberen Bereich in Richtung des Wasscrauslaufrohres (3) verkleinert.

## Revendications

1. Échangeur de chaleur à foyer, comportant une enveloppe extérieure (1) et une enveloppe intérieure (5), un réservoir d'eau formé entre l'enveloppe extérieure (1) et l'enveloppe intérieure (5) formant la paroi latérale de la chambre de combustion, la chambre de combustion étant fermée en bas par un fond (8) présentant une ouverture (9) pour le brûleur,
échangeur de chaleur avec un tube d'entrée (4) dans la partie inférieure et un tube de sortie (3) dans la partie supérieure,
échangeur de chaleur muni de tubes (10) pour l'écoulement des gaz de combustion à travers le conduit (12) d'échappement des fumées vers la cheminée,
les tuyaux (10) pour l'écoulement des fumées étant situés dans le réservoir d'eau (14) radialement autour de la paroi latérale de la chambre de combustion (7) et reliés au conduit de fumées (12) par le fond tamisé (13) du réservoir d'eau (14),
les tuyaux (10) pour l'écoulement des gaz de combustion étant raccordés à la chambre de combustion (7) par
les premiers trous (11) réalisés dans la partie supérieure de la paroi latérale de la chambre de combustion (7), **caractérisé en cc que** l'échangeur de chaleur comporte un distributeur d'eau (16) avec des deuxièmes orifices (17) pour alimenter en eau le réservoir d'eau (14) situé sous le fond (8) de la chambre de combustion (7) et situé sur l'enveloppe intérieure (5).

2. Échangeur selon la revendication 1, **caractérisé en ce que** les tuyaux (10) pour l'écoulement des fumées ont une forme de « L » inversée, reliée par un bras plus court à la chambre de combustion (7).

3. Échangeur selon la revendication 1 ou 2, **caractérisé en ce que** les tuyaux (10) pour l'écoulement des fumées sont nervurés (15).

4. Échangeur de chaleur selon les revendications 1 à 3, **caractérisé en ce que** les premiers orifices (11) reliant les tuyaux (10) pour l'écoulement des fumées à la chambre de combustion (7) sont réalises à la même hauteur que la paroi latérale de la chambre de combustion (7).

5. Échangeur de chaleur selon la revendication 1 ou 3, **caractérisé en ce que** les premiers orifices (11) reliant les tuyaux (10) pour l'écoulement des fumées à la chambre de combustion (7) sont réalisés à différentes hauteurs de la paroi latérale de la chambre de combustion (7).

6. Échangeur selon la revendication 1 à 5, **caractérisé en ce que** les troisièmes orifices (19) dans le fond tamisé (13) reliant les tuyaux (10) pour l'écoulement des fumées à la cheminée (12) sont disposés en au moins un anneau.

7. Échangeur selon la revendication 1 à 6, **caractérisé en ce que** la paroi latérale de la chambre de combustion (7) a une forme cylindrique.

8. Échangeur selon la revendication 1 à 6, **caractérisé en ce que** la paroi latérale de la chambre de combustion (7) a une forme conique se rétrécissant vers le haut ou vers le bas.

9. Échangeur selon la revendication 1 à 8, **caractérisé en ce que** le fond (8) de la chambre de combustion (7) est équipé d'au moins un tube de drainage (19) évacuant le condensat de la chambre de combustion (7).

10. Échangeur selon la revendication 9, **caractérisé en ce que** le fond (8) de la chambre de combustion (7) présente une inclinaison ou des inclinaisons vers le tuyau ou les tuyaux de drainage (19).

11. Échangeur selon la revendication 1 à 10, **caractérisé en ce que** le tuyau d'arrivée d'eau (4) se trouve dans la paroi latérale de l'enveloppe extérieure (1).

12. Échangeur selon la revendication 9 à 10, **caractérisé en ce que** le tuyau d'arrivée (4) de l'eau se trouve dans le fond du distributeur d'eau (1).

13. Échangeur selon la revendication 1 à 12, **caractérisé en ce que** la section transversale de la chambre (14) du passage d'eau dans la partie supérieure diminue dans la direction du tuyau de sortie (3) d'eau.
